# EUROPEAN PATENT APPLICATION

(11) **EP 4 826 295 A1**
(43) Date of publication of application: **21.10.2026**
(21) Application number: 24904457.9
(22) Date of filing: 13.12.2024
(51) Int. Cl.: F23J 15/06, F23L 7/00, F23C 9/00, C25B 1/04, F25J 1/00, B01D 53/62

(54) **SYSTEMS AND METHODS FOR REDUCING FUEL CONSUMED IN COMBUSTION FACILITIES AND RECOVERING GENERATED CO2**

(30) Priority: 14.12.2023 KR 20230181738
(71) Applicant: POSCO Holdings Inc., Pohang-si, Gyeongsangbuk-do 37859 (KR)
(72) Inventor: CHO, Han-Chang, Pohang-si, Gyeongsangbuk-do 37877 (KR)
(74) Representative: Pfenning, Meinig & Partner mbB
(86) International application number: PCT/KR2024/096997
(87) International publication number: WO 2025/127894

(57) **Abstract**

The present invention relates to a system for reducing fuel consumption and recovering CO₂, comprising: a water electrolysis facility system for producing hydrogen and oxygen from water or steam; a combustion facility for combusting fuel by using the produced oxygen; and a CO₂ recovery facility for recovering CO₂ from an exhaust gas discharged from the combustion facility.

## Description

### Technical Field

The present disclosure relates to a method for reducing fuel consumed in combustion facilities and recovering generated CO₂, and more particularly, to a method for reducing fuel consumed in combustion facilities and recovering generated CO₂ using oxygen obtained from water electrolysis.

### Background Art

In general, technologies for producing hydrogen at low cost in order to achieve carbon neutrality have been proposed, and thereamong, a technique of producing hydrogen through water electrolysis using electricity generated by solar power or the like is attracting attention.

Water electrolysis methods are broadly divided into high-temperature water electrolysis and low-temperature water electrolysis. Low-temperature water electrolysis is a method of separating water containing an electrolyte into hydrogen and oxygen by electrolysis, and the high-temperature water electrolysis is a technique of introducing high-temperature steam into a solid oxide electrolysis cell (SOEC), which is a water electrolysis cell, and separating hydrogen and oxygen by electrolysis.

Meanwhile, the conventional technology focuses on producing hydrogen through water electrolysis and does not pay much attention to using oxygen generated in the process, and thus there is a need to develop technology that utilizes oxygen produced through water electrolysis.

### Disclosure of Invention

### Technical Problem

An aspect of the present disclosure is to provide a method for reducing fuel consumed in combustion facilities and recovering generated CO₂ by using oxygen obtained from water electrolysis.

Another aspect of the present disclosure is to provide a facility system for reducing fuel consumption and recovering generated CO₂ by consuming oxygen obtained from water electrolysis.

### Solution to Problem

According to an aspect of the present disclosure, a system for reducing fuel consumption and recovering CO₂ includes a water electrolysis facility for producing hydrogen and oxygen from water or steam; a combustion facility for combusting fuel by using the produced oxygen; and a CO₂ recovery facility for recovering CO₂ from an exhaust gas discharged from the combustion facility.

According to another aspect of the present disclosure, a method for reducing fuel consumed in combustion facilities and recovering generated CO₂ includes: an electrolysis step of producing hydrogen and oxygen from water or steam; a combustion step of combusting fuel using the produced oxygen; and a CO₂ recovery step of recovering CO₂ from exhaust gas discharged after the combustion step.

### Advantageous Effects of Invention

According to an aspect of the present disclosure, oxygen which is a byproduct obtained in the water electrolysis facility can be used as an oxidant so that plant thermal efficiency can be increased. In addition, since recovered oxygen and CO₂ are used for combustion, it is possible to increase the concentration of CO₂ in exhaust gas compared with when air is introduced for cooling, thereby obtaining high-purity CO₂ having higher concentration.

### Brief Description of Drawings

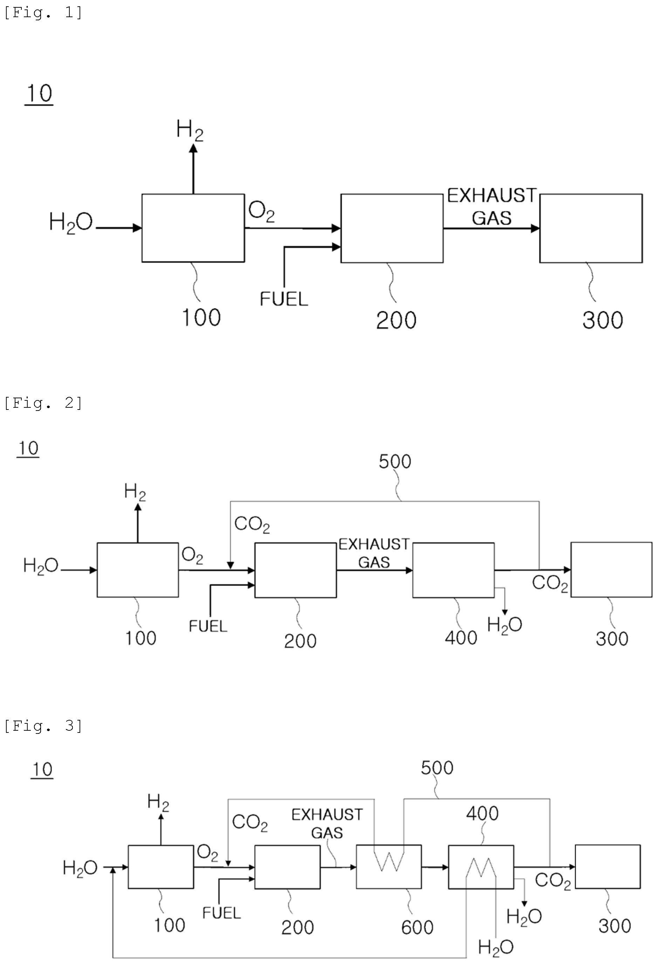

FIGS. 1 to 3 are views showing a configuration of a system for reducing fuel consumption and recovering CO₂ according to an embodiment of the present disclosure.

### Best Mode for the Invention

FIGS. 1 to 3 are views showing a configuration of a system for reducing fuel consumption and recovering CO₂ according to an embodiment of the present disclosure.

Hereinafter, a preferred embodiment of the present disclosure will be described with reference to FIGS. 1 to 3. However, the embodiments of the present disclosure may be modified in various other forms and are not limited to the following embodiments.

According to an embodiment of the present disclosure, a system for reducing fuel consumption and recovering CO₂ 10 may include a water electrolysis facility 100 for producing hydrogen and oxygen from water or steam; a combustion facility 200 for combusting fuel by using the produced oxygen; and a CO₂ recovery facility 300 for recovering CO₂ from an exhaust gas from which H₂O has been removed.

The water electrolysis facility 100 may be a facility for producing hydrogen and oxygen by electrolyzing water using electricity produced from solar power or the like.

The water electrolysis facility 100 may be a low-temperature water electrolysis facility that produces hydrogen and oxygen by electrolyzing water containing an electrolyte, or a high-temperature water electrolysis facility that puts steam of 700 to 800°C into a solid oxide electrolysis cell (SOEC), which is a water electrolysis cell, and then performs electrolysis.

Meanwhile, since the purity of hydrogen or oxygen may be somewhat low in a low-temperature water electrolysis process, it is preferable that the water electrolysis facility 100 is a high-temperature water electrolysis facility.

Since the water electrolysis facility 100 electrolyzes water or steam (H₂O), it can produce high-purity oxygen, that is, pure oxygen. For example, the oxygen produced in the water electrolysis facility 100 may have a purity of 90 mol%, 95 mol%, 99 mol%, or 100 mol%.

The oxygen produced in the water electrolysis facility 100 may be used to burn fuel in a combustion facility 200.

It is known that when pure oxygen is used as an oxidant, fuel savings of about 50% can be achieved.

Therefore, the system for reducing fuel consumption and recovering CO₂ 10 according to an embodiment of the present disclosure may increase thermal efficiency by using oxygen obtained from the water electrolysis facility 100 as an oxidant.

The combustion facility 200 may be a combustion furnace or a boiler. More specifically, the combustion furnace may be selected from the group consisting of a dryer for drying moisture in raw materials such as coal; an incinerator for incinerating waste; a heating furnace for heating steel slabs; and a forging furnace for heating materials to forge them.

The fuel may be introduced into the combustion facility 200 together with oxygen and then combusted. The fuel used in the combustion facility 200 is not particularly limited, and any conventionally known fuel can be used without limitation. For example, natural gas, hydrogen or the like may be used as the fuel.

The oxygen supplied to the combustion facility 200 may be produced by the water electrolysis facility 100.

The combustion facility 200 may discharge exhaust gas generated after the combustion. The exhaust gas may be a gas including CO₂.

More specifically, the exhaust gas discharged from a conventional combustion facility 200 in which fuel is combusted by introducing air as an oxidant may include CO₂, H₂O, O₂, and small amounts of unburned gases and nitrogen oxides (NOx).

Meanwhile, the system for reducing fuel consumption and recovering CO₂ 10 according to an embodiment of the present disclosure uses oxygen obtained from the water electrolysis facility 100 as an oxidant, so that it is possible to reduce a content of NOx included in exhaust gas. Therefore, the exhaust gas discharged from the combustion facility 200 may include high contents of CO₂, H₂O and some O₂ which has not participated in oxidation reaction.

The system for reducing fuel consumption and recovering CO₂ 10 according to an embodiment of the present disclosure may include a CO₂ recovery facility 300 for recovering CO₂ from the exhaust gas.

The CO₂ recovery facility 300 may be used without any limitation as long as it can separate CO₂ from the exhaust gas containing CO₂. For example, the CO₂ recovery facility 300 may be selected from the group consisting of a PSA facility, a cryogenic facility for lowering temperature to below the liquefaction temperature of CO₂ and thus obtaining liquid CO₂, and a compression facility for liquefying CO₂ by applying high pressure.

The CO₂ recovery facility 300 may recover at least 80%, at least 90%, at least 95%, at least 99%, or 100% of CO₂ from the exhaust gas based on mole %.

The system for reducing fuel consumption and recovering CO₂ 10 according to an embodiment of the present disclosure may further include a condenser 400.

The condenser 400 may be configured to cool the exhaust gas discharged from the combustion facility 200 and condense and separate H₂O included in the exhaust gas.

The condenser 400 may cool the exhaust gas discharged from the combustion facility 200 to -20 to 100°C, more specifically, 0 to 50°C. If the temperature of the cooled exhaust gas is less than -20°C, excessive energy may be consumed for cooling and thus it may not be economical, and if the temperature exceeds 100°C, H₂O in a vapor state may not be sufficiently condensed and removed.

That is, since the water vapor state of H₂O included in the exhaust gas is condensed and removed, the exhaust gas passing through the condenser 400 may include a higher content of CO₂.

Meanwhile, the condenser 400 may remove residual heat of the exhaust gas discharged from the combustion facility 200 through heat exchange with cooling water to cool the exhaust gas.

In addition, while the condenser 400 cools exhaust gas through heat exchange, warm cooling water or steam may be supplied to the water electrolysis facility 100 in a form of warm water or steam and used for producing oxygen.

When the water electrolysis facility 100 is a high-temperature water electrolysis facility, since steam can be supplied using residual heat of exhaust gas recovered by the condenser 400, energy required to generate steam by heating water with electricity can be saved and thus thermal efficiency can be increased.

Referring to FIG. 2, the system for reducing fuel consumption and recovering CO₂ 10 according to an embodiment of the present disclosure may further include an exhaust gas recirculation passage 500.

The exhaust gas recirculation passage 500 may separate at least a part of the exhaust gas as recirculated exhaust gas and mix the recirculated exhaust gas with oxygen produced in the water electrolysis facility 100 to supply it to the combustion facility 200.

The recirculated exhaust gas may be a gas comprising at least 80%, at least 90%, at least 95%, at least 99%, or 100% of CO₂ by mole %.

Therefore, the exhaust gas recirculation passage 500 may mix the recirculated exhaust gas with oxygen produced in the water electrolysis step to thereby reduce a concentration of oxygen introduced into the combustion facility 200. Accordingly, it is possible to prevent deterioration of the combustion facility 200 and decrease an amount of NOx generated by lowering a flame temperature within the combustion facility 200 which has been excessively increased.

The system for reducing fuel consumption and recovering CO₂ 10 according to an embodiment of the present disclosure may further include a flow rate control valve for controlling a flow rate of the recirculated exhaust gas flowing through the exhaust gas recirculation passage 500.

The system for reducing fuel consumption and recovering CO₂ 10 according to an embodiment of the present disclosure may achieve a fuel saving effect while preventing deterioration of the combustion facility 200 and reducing NOx generation by adjusting the flow rate of the recirculated exhaust gas through the flow rate control valve.

In addition, the system for reducing fuel consumption and recovering CO₂ 10 according to an embodiment of the present disclosure may further include a temperature measuring device that measures the temperature of exhaust gas discharged from the combustion facility 200, that is, an outlet temperature of the combustion facility.

The system for reducing fuel consumption and recovering CO₂ 10 according to an embodiment of the present disclosure may measure an outlet temperature of the combustion facility 200 and adjust a flow rate of exhaust gas flowing through the exhaust gas recirculation passage 500 in accordance with the measured outlet temperature of the combustion facility 200.

Referring to FIG. 3, the system for reducing fuel consumption and recovering CO₂ 10 according to an embodiment of the present disclosure may further include a recirculation exhaust gas preheater 600 for preheating the recirculation exhaust gas.

The recirculation exhaust gas preheater 600 may be a heat exchanger that preheats the recirculated exhaust gas by heat exchanging the exhaust gas discharged from the combustion facility 200 with the recirculated exhaust gas flowing through the exhaust gas recirculation passage 500.

Through the heat exchange in the recirculation exhaust gas preheater 600, the recirculation exhaust gas may be raised to a temperature of 300 to 700°C, and the exhaust gas discharged from the combustion facility 200 may be cooled to a temperature of 200 to 600°C.

That is, the recirculation exhaust gas preheater 600 may reduce a cooling load of the condenser 400 by first cooling the exhaust gas discharged from the combustion facility 200 and increase the temperature of the recirculated exhaust gas supplied to the combustion facility 200 by recirculating sensible heat, thereby improving the overall thermal efficiency of the process.

### Mode for the Invention

According to another aspect of the present disclosure, there is provided a method for reducing fuel consumed in combustion facilities and recovering generated CO₂, including: an electrolysis step of producing hydrogen and oxygen from water or steam; a combustion step of combusting fuel using the produced oxygen; and a CO₂ recovery step of recovering CO₂ from exhaust gas discharged after the combustion step.

The water electrolysis step may be performed by a low-temperature water electrolysis method of producing hydrogen and oxygen through the electrolysis of water containing an electrolyte or a high-temperature water electrolysis method of introducing steam having a temperature of 700 to 800°C into a solid oxide electrolysis cell (SOEC), which is a water electrolysis cell, and electrolyzing the steam.

The water electrolysis step may produce high-purity oxygen, that is, pure oxygen. For example, the purity of the oxygen produced in the water electrolysis step may be 90 mol%, or more, 95 mol%, or more, 99 mol%, or more, or 100 mol%.

The oxygen produced in the water electrolysis step may be used to burn fuel by being introduced into a combustion step.

The combustion step may be a step of combusting fuel with oxygen. The fuel used in the combustion step is not particularly limited and any conventionally known fuel can be used without limitation. For example, natural gas, hydrogen or the like may be used as the fuel.

The oxygen introduced into the combustion step may be the oxygen produced in the water electrolysis step.

The combustion step may discharge exhaust gas generated after the combustion, and the exhaust gas may be a gas including CO₂.

The method according to an embodiment of the present disclosure may include a CO₂ recovery step of recovering CO₂ from the exhaust gas.

The method for recovering CO₂ used in the step of recovering CO₂ may be any method capable of separating CO₂ from a flue gas containing CO₂.

The CO₂ recovery step may recover at least 80%, at least 90%, at least 95%, at least 99%, or 100% of CO₂ from the exhaust gas based on a molar %.

The method according to an embodiment of the present disclosure may further include a dehydration step of separating H₂O included in exhaust gas discharged after the combustion step.

The dehydration step may be a step of cooling the exhaust gas discharged after the combustion step to condense and separate H₂O contained in the exhaust gas.

In the dehydration step, the exhaust gas discharged after the combustion step may be cooled to -20 to 100°C, more specifically, 0 to 50°C. If the temperature of the cooled exhaust gas is less than -20°C, excessive energy may be consumed for cooling and thus it may not be economical, and if the temperature exceeds 100°C, H₂O vapor may not be sufficiently condensed and removed.

The exhaust gas after the dehydration step may contain a higher content of CO₂ because H₂O present in the exhaust gas in the form of water vapor is condensed and removed.

In the dehydration step, residual heat of exhaust gas may be removed by exchanging heat with cooling water to cool the exhaust gas.

The cooling water heated during the gas dehydration step may be supplied to the water electrolysis step in a form of hot water or steam and used for producing oxygen.

When the water electrolysis step is performed using a high-temperature water electrolysis facility, steam can be supplied by utilizing residual heat of exhaust gas, and thus, energy required to generate steam by heating water with electricity may be saved and thermal efficiency can be increased.

The method according to an embodiment of the present disclosure may further include an exhaust gas recirculation step.

The exhaust gas recirculation step may include separating at least a portion of the exhaust gas as recirculated exhaust gas and mixing the recirculated exhaust gas with oxygen produced in the water electrolysis step to supply the mixture to the combustion facility.

The recirculated exhaust gas may be a gas comprising at least 80%, at least 90%, at least 95%, at least 99%, or 100% of CO₂ by mole %.

Therefore, the exhaust gas recirculation step may reduce a concentration of oxygen supplied to the combustion facility 200 by mixing the recirculated exhaust gas with oxygen produced in the water electrolysis step. Accordingly, it is possible to prevent deterioration of the combustion facility 200 and decrease an amount of NOx generated by lowering a flame temperature within the combustion facility 200 which has been excessively increased.

In the exhaust gas recirculation step, a flow rate of the recirculated exhaust gas may be controlled.

For example, the exhaust gas recirculation step may include the steps of:
(i) measuring an outlet temperature of a combustion facility; and
(ii) adjusting a flow rate of exhaust gas mixed with oxygen through an exhaust gas recirculation passage when the measured outlet temperature of the combustion facility is outside of a predetermined temperature range.

More specifically, the step (ii) may include the steps of:
(ii-a) decreasing a flow rate of recirculated exhaust gas mixed with oxygen through an exhaust gas recirculation passage when an outlet temperature of the combustion facility exceeds an upper threshold; and
(ii-b) increasing a flow rate of recirculated exhaust gas mixed with oxygen through the exhaust gas recirculation passage when the outlet temperature of the combustion facility is below a lower threshold.

The upper limit threshold value of the temperature at the outlet of the combustion facility may be a predetermined value in the range of 800 to 1,200°C.

The lower limit threshold value of the outlet temperature of the combustion facility may be a predetermined value in the range of 300 to 700°C.

The increased or decreased flow rate of the exhaust gas may be controlled in a range of more than 0% and less than or equal to 10% based on the flow rate before controlling the flow rate of the exhaust gas.

The method according to an embodiment of the present disclosure may further include a step of preheating the recirculation exhaust gas.

The recirculation exhaust gas preheating step may be a heat exchange step of preheating the recirculation exhaust gas by heat exchanging the exhaust gas discharged from the combustion facility 200 with the recirculation exhaust gas flowing through the exhaust gas recirculation passage 500.

In the recirculation exhaust gas preheating step, the heat exchange may raise the temperature of the recirculation exhaust gas to 300 to 700°C, and cool the exhaust gas discharged from the combustion facility 200 to 200 to 600°C.

### Description of Reference Characters

- 10:: System For Fuel Consumption Reduction and CO₂ Recovery
- 100:: Water Electrolysis Facility
- 200:: Combustion Facility
- 300:: CO₂ Recovery Facility
- 400:: Condenser
- 500:: Exhaust Gas Recirculation Passage
- 600:: Recirculation Exhaust Gas Preheater

## Claims

1. A system for reducing fuel consumption and recovering CO₂ comprising:
a water electrolysis facility for producing hydrogen and oxygen from water or steam;
a combustion facility for combusting fuel by using the produced oxygen; and
a CO₂ recovery facility for recovering CO₂ from an exhaust gas discharged from the combustion facility.

2. The system for reducing fuel consumption and recovering CO₂ according to claim 1, further comprising a condenser configured to condense and separate H₂O included in the exhaust gas discharged from the combustion facility.

3. The system for reducing fuel consumption and recovering CO₂ according to claim 1, further comprising an exhaust gas recirculation passage, wherein the exhaust gas recirculation passage separates at least a portion of the exhaust gas as recirculated exhaust gas and mixes the recirculated exhaust gas with oxygen produced in the water electrolysis facility for supplying to the combustion facility.

4. The system for reducing fuel consumption and recovering CO₂ according to claim 3, further comprising a flow rate control valve configured to adjust the flow rate of the recirculated exhaust gas flowing through the exhaust gas recirculation passage.

5. The system for reducing fuel consumption and recovering CO₂ according to claim 3, further comprising a recirculation exhaust gas preheater, wherein the recirculation exhaust gas preheater exchanges heat between the exhaust gas discharged from the combustion facility and the recirculation exhaust gas flowing through the exhaust gas recirculation passage.

6. A method for reducing fuel consumed in combustion facilities and recovering generated CO₂, the method comprising:
an electrolysis step of producing hydrogen and oxygen from water or steam;
a combustion step of combusting fuel using the produced oxygen; and
a CO₂ recovery step of recovering CO₂ from exhaust gas discharged after the combustion step.

7. The method of claim 6, further comprising a dehydration step of separating H₂O from the exhaust gas discharged after the combustion.

8. The method of claim 6 further comprising an exhaust gas recirculation step, wherein the exhaust gas recirculation step comprises separating at least a portion of the exhaust gas and mixing the separated portion of the exhaust gas with oxygen produced in the water electrolysis step to supply the mixture to a combustion facility.

9. The method of claim 8 wherein the exhaust gas recirculation step comprises the steps of:
(i) measuring an outlet temperature of a combustion facility; and
(ii) adjusting a flow rate of exhaust gas mixed with oxygen through an exhaust gas recirculation passage when the measured outlet temperature of the combustion facility is outside of a predetermined temperature range, and
wherein the step of (ii) includes the steps of:
(ii-a) decreasing a flow rate of recirculated exhaust gas mixed with oxygen through an exhaust gas recirculation passage when an outlet temperature of the combustion facility exceeds an upper threshold; and
(ii-b) increasing a flow rate of recirculated exhaust gas mixed with oxygen through the exhaust gas recirculation passage when the outlet temperature of the combustion facility is below a lower threshold.
